Europäisches Patentamt

European Patent Office

Office européen des brevets

(11) Veröffentlichungsnummer: **0 110 057**
**A2**

## (12) EUROPÄISCHE PATENTANMELDUNG

(21) Anmeldenummer: 83109902.3

(22) Anmeldetag: 04.10.83

(51) Int. Cl.³: **A 47 J 41/02**

---

(30) Priorität: **30.11.82 DE 3244312**

(43) Veröffentlichungstag der Anmeldung: **13.06.84**
**Patentblatt 84/24**

(84) Benannte Vertragsstaaten: **AT BE CH DE FR GB IT LI LU NL SE**

(71) Anmelder: **Rotpunkt Dr. Anso Zimmermann, Industriestrasse, D-6434 Niederaula / Bad Hersfeld (DE)**

(72) Erfinder: **Zimmermann, Anso, Dr., Seilerweg 34, D-6430 Bad Hersfeld (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.-Ing. J. Schmidt-Evers Dipl.-Ing. W. Melzer Steinsdorfstrasse 10, D-8000 München 22 (DE)**

---

(54) Schraubverschluss für Isolierkannen oder -flaschen mit Sieb-Hohlkörper.

(57) Die Erfindung betrifft einen Schraubverschluß für Isolierkannen oder -flaschen, bestehend aus einem Isoliergefäß und einem diesen umgebenden Mantel, wobei der Schraubverschluß in ein mit dem Mantel verbundenes Kopfteil einschraubbar ist und aus einem Kunststoffteil vorzugsweise mit eingesetztem, sich auf eine Dichtfläche der zu verschließenden Öffnung dichtend anlegenden Dichtring aus elastischem Kunststoff besteht.

Mit dem die Öffnung des Isoliergefäßes überdeckenden Bereich des Kunststoffteiles ist ein in das Isoliergefäß ragender Sieb-Hohlkörper lösbar verbunden, der in seiner Querschnittsform der Querschnittsform der Isoliergefäß-Öffnung weitestgehend angepaßt ist, ohne an der Innenwandung der Isoliergefäß-Öffnung anzuliegen.

Schraubverschluß für Isolierkannen oder -flaschen
mit Sieb-Hohlkörper

Die Erfindung bezieht sich auf einen Schraubverschluß für Isolierkannen oder -flaschen, bestehend aus einem Isoliergefäß und einem dieses umgebenden Mantel, wobei der Schraubverschluß in ein mit dem Mantel verbundenes Kopfteil einschraubbar ist und aus einem Kunststoffteil, vorzugsweise mit eingesetztem, sich auf eine Dichtfläche der zu verschließenden Öffnung dichtend anlegenden Dichtring aus elastischem Kunststoff besteht.

Derartige Schraubverschlüsse für die Isolierkannen sind seit längerem bekannt. Insbesondere werden derartige Schraubverschlüsse mit einem steilgängigen Außengewinde versehen, das in ein entsprechend steiles Gewinde im Kopfteil der Isolierkanne einschraubbar ist, wobei eine halbe Drehung des Schraubverschlusses genügt, um das Kunststoffteil bzw. den Dichtring so weit von der Dichtfläche im Bereich der zu verschließenden Öffnung abzuheben, das eine genügend große Ausflußöffnung für Flüssigkeit zu einem vorzugsweise ebenfalls am Kopfteil der Kanne angeordneten Ausgießer hin freigegeben wird.

Es hat sich bei Warm- und Kühlhalteversuchen gezeigt, daß der größte Wärmeübergang im Bereich des Schraubverschlusses erfolgt. Dessen Kunststoffteile haben eine weitaus ungünstigere Wärmeübergangszahl als beispielsweise normale Korkstopfen. Der Wärmeübergang im Bereich des Schraubverschlusses wird auch nicht entscheidend dadurch verbessert, daß wie bekannt der Innenraum des gespritzten Kunststoffteiles des Schraubverschlusses mit einem, gute Wärme isolierenden, Material ausgefüllt wird. Zur Verminderung des Wärmeüberganges im Bereich des Schraubverschlusses ist durch die DE-OS 25 48 199 ein Schraubverschluß der eingangs genannten Art bekannt geworden, bei dem ein in die Öffnung des Isoliergefäßes ragender Bereich des Kunststoffteiles mit einer flexiblen Scheibe bzw. Rand dünner Wandstärke versehen ist, der in seinem Durchmesser der Querschnittsform der Isoliergefäß-Öffnung weitestgehend angepaßt ist.

Der Erfindung liegt die Aufgabe zugrunde, einen Schraubverschluß der genannten Art unter Beibehaltung seines günstigen, geringen Wärmeüberganges dahingehend weiterzubilden, daß der zur Verringerung des Wärmeüberganges innerhalb der Isoliergefäß-Öffnung durch den Schraubverschluß ausgefüllte Raum gleichzeitig zur Aufnahme von der Flüssigkeit in dem Isoliergefäß zuzuführenden Extrakten oder Ingredienzien, beispielsweise Tee, Kräutern und dergleichen, dienen kann, ohne daß diese beispielsweise Kräuter oder Tee in die Flüssigkeit gelangen.

Dazu wird erfindungsgemäß bei einem Schraubverschluß für Isolierkannen oder -flaschen der eingangs genannten Art vorgeschlagen, daß mit dem die Öffnung des Isoliergefäßes überdeckenden Bereich des Kunststoffteiles ein in das Isoliergefäß ragender Sieb-Hohlkörper lösbar verbunden ist, der in seiner Querschnittsform der Querschnittsform der Isoliergefäß-Öffnung weitestgehend angepaßt ist ohne an der Innenwandung der Isoliergefäß-Öffnung anzuliegen.

Ein solcher Sieb-Hohlkörper erfüllt funktionell die gleiche wärmedämmende Wirkung wie die bekannten flexiblen Scheiben, kann aber gleichzeitig beispielsweise Teeblätter aufnehmen, um in einer derartigen Isolierkanne oder -flasche gleichzeitig entsprechend der Wirkung eines bekannten Teeeies die Aufbereitung von Tee zu ermöglichen, wenn in den Sieb-Hohlkörper Teeblätter eingefüllt sind und das Isoliergefäß mit kochendem Wasser vor dem Aufschrauben des Schraubverschlusses gefüllt wurde. Der Sieb-Hohlkörper kann je nach Verwendungszweck verschieden groß ausgebildet sein, d.h. verschieden tief in das Isoliergefäß hineinragen, je nachdem, ob bei aufgeschraubtem Schraubverschluß der Sieb-Hohlkörper in die Flüssigkeit in dem Isoliergefäß vollständig oder nur teilweise eintauchen soll. Für die Zuführung bestimmter Ingredienzien in eine Flüssigkeit kann es auch ausreichend sein, wenn diese Ingredienzien innerhalb des Sieb-Hohlkörpers nicht vollständig in die Flüssigkeit eintauchen, sondern sich lediglich in dem Dampfraum über der beispielsweise heißen Flüssigkeit befinden. Für ein und denselben Schraubverschluß können verschieden große und in der Zahl und Weite ihrer Öffnungen unterschiedliche Sieb-Hohlkörper bereitgehalten werden, so daß ein und derselbe Schraubverschluß für verschiedene Sieb-Hohlkörper verwendet werden kann und auch eine Anpassung bzw. ein Austausch der Sieb-Hohlkörper bei Verwendung mit verschiedenen Isoliergefäßformen möglich ist. Es ist lediglich erforderlich, die gleiche Querschnittsform und Größe der Isoliergefäß-Öffnung und der verschiedenen Sieb-Hohlkörper beizubehalten.

Zweckmäßige Ausgestaltungen der Erfindung sind in den Unteransprüchen gekennzeichnet. Um entsprechend den bekannten Schraubverschlüssen ein Ausgießen von Flüssigkeit bei nur beispielsweise halber Drehung des Schraubverschlusses zu ermöglichen, ist gemäß Anspruch 9 der Sieb-Hohlkörper mit mindestens einer sich über einen Teil seines Umfangsbereiches erstreckenden, zurückspringenden Aussparung versehen, so daß die Flüssigkeit an dem Sieb-Hohlkörper vorbeifließen kann, ohne daß es eines vollständigen Herausnehmens des Sieb-Hohlkörpers zusammen mit dem Schraubverschluß bedarf.

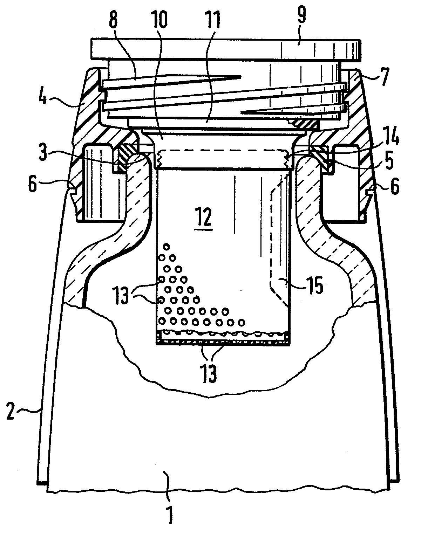

Eine beispielsweise Ausführungsform der Erfindung wird im folgenden anhand der beigefügten einzigen Zeichnung beschrieben. Die Zeichnung zeigt im Schnitt und Ausschnitt den oberen Bereich einer Isolierkanne mit erfindungsgemäßem Schraubverschluß.

Die Isolierkanne besteht aus einem wärmeisolierenden Isoliergefäß 1 und einem dieses umgebenden Mantel 2. Im Bereich der Öffnung 3 des Isoliergefäßes 1 schließt ein insgesamt mit 4 bezeichnetes Kopfteil nach oben an, welches gegen den oberen Rand der Öffnung 3 des Isoliergefäßes 1 durch eine Dichtung 5 abgedichtet ist und mit dem Mantel 2 auf geeignete Weise bei 6 verbunden ist. Das Kopfteil 4 umfaßt einen zylindrischen Rand 7 mit Innengewinde, wobei der zylindrische Rand 7 auf einer Seite zu einem nicht dargestellten Ausgießer geformt sein kann. Auf der dem nicht dargestellten Ausgießer gegenüberliegenden Seite des Kopfteiles 4 kann ein ebenfalls nicht dargestellter Henkel angeformt sein. In das Innengewinde des Randes 7 ist mit seinem steilgängigen Außengewinde 8 ein insgesamt mit 9 bezeichneter Schraubverschluß eingeschraubt, der aus einem gespritzten Kunststoffteil mit einem in die Öffnung 3 des Isoliergefäßes 2 ragenden Bereich 10 besteht. Mit 11 ist eine an dem Schraubverschluß 9 angeordnete elastische Dichtung bezeichnet, welche sich im aufgeschraubten Zustand des Schraubverschlusses 9 auf einen Dichtungssitz im Kopfteil 4 auflegt.

Mit dem in die Isoliergefäß-Öffnung 3 ragenden Bereich 10 des Schraubverschlusses 9 ist ein Sieb-Hohlkörper 12 lösbar verbunden. Der Sieb-Hohlkörper ist beispielsweise ein dünn-

0110057

wandiger zylindrischer Kunststoffkörper, der an seinem Umfangs- und Bodenbereich mit Sieböffnungen 13 versehen ist. Bei der gezeigten Ausführungsform ist der Sieb-Hohlkörper becherförmig, nach oben offen ausgebildet und über ein Gewinde 14 an dem Bereich 10 des Schraubverschlusses 9 lösbar angeschraubt. Die Querschnittsform des Sieb-Hohlkörpers ist so gewählt, daß er die Öffnung 3 des Isoliergefäßes weitestgehend ausfüllt, ohne an den Innenwandungen der Öffnung 3 des Isoliergefäßes anzuliegen. An ein oder mehreren Stellen des Umfanges des Sieb-Hohlkörpers sind zurückspringende Aussparungen 15 vorgesehen, von denen eine in der Zeichnung strichliert angedeutet ist. Diese Aussparungen 15 ermöglichen ein Ausgießen von Flüssigkeit, wenn der Schraubverschluß 9 beispielsweise durch eine halbe Drehung geöffnet wurde, so daß durch das Steilgewinde 8 der Dichtring 11 genügend weit von seinem Sitz abgehoben ist.

ANSPRÜCHE

1. Schraubverschluß für Isolierkannen oder -flaschen, bestehend aus einem Isoliergefäß und einem dieses umgebenden Mantel, wobei der Schraubverschluß in ein mit dem Mantel verbundenes Kopfteil einschraubbar ist und aus einem Kunststoffteil vorzugsweise mit eingesetztem, sich auf eine Dichtfläche der zu verschließenden Öffnung dichtend anlegenden Dichtring aus elastischem Kunststoff besteht, dadurch gekennzeichnet, daß mit dem die Öffnung (3) des Isoliergefäßes (1) überdeckenden Bereich (10) des Kunststoffteiles ein in das Isoliergefäß (1) ragender Sieb-Hohlkörper (12) lösbar verbunden ist, der in seiner Querschnittsform der Querschnittsform der Isoliergefäß-Öffnung (3) weitestgehend angepaßt ist, ohne an der Innenwandung der Isoliergefäß-Öffnung (3) anzuliegen.

2. Schraubverschluß nach Anspruch 1, dadurch gekennzeichnet, daß der Sieb-Hohlkörper (12) ein dünnwandiges Kunststoffteil mit Sieblöchern (13) in seinen Umfangs- und Bodenbereich ist.

0110057

3. Schraubverschluß nach Anspruch 1 oder 2, dadurch gekennzeichnet, daß der Sieb-Hohlkörper (12) zylindrische Form hat.

4. Schraubverschluß nach Anspruch 3, dadurch gekennzeichnet, daß der Bodenbereich des Sieb-Hohlkörpers (12) als feinmaschiges Maschensieb ausgebildet ist.

5. Schraubverschluß nach Anspruch 4, dadurch gekennzeichnet, daß das Maschensieb auswechselbar im Sieb-Hohlkörper (12) angeordnet ist.

6. Schraubverschluß nach Anspruch 3, dadurch gekennzeichnet, daß der Sieb-Hohlkörper (12) oben offen ist, und das Kunststoffteil (10) des Schraubverschlusses (9) den Sieb-Hohlkörper (12) oben verschließt.

7. Schraubverschluß nach Anspruch 6, dadurch gekennzeichnet, daß der Sieb-Hohlkörper (12) mit dem Kunststoffteil (10) verschraubt ist.

8. Schraubverschluß nach Anspruch 6, dadurch gekennzeichnet, daß der Sieb-Hohlkörper (12) mit dem Kunststoffteil (10) verrastet ist.

9. Schraubverschluß nach einem der vorhergehenden Ansprüche, dadurch gekennzeichnet, daß der Sieb-Hohlkörper (12) mindestens eine sich über einen Teil seines Umfangsbereiches erstreckende, zurückspringende Aussparung (15) aufweist, welche ein Durchfließen von in dem Isoliergefäß (1) befindlicher Flüssigkeit bei nur teilweise geöffnetem Schraubverschluß zuläßt.

C110057